(19) Europäisches Patentamt / European Patent Office / Office européen des brevets

(11) **EP 1 846 296 B1**

(12) **FASCICULE DE BREVET EUROPEEN**

(45) Date de publication et mention
de la délivrance du brevet:
**01.07.2009 Bulletin 2009/27**

(21) Numéro de dépôt: **05762574.1**

(22) Date de dépôt: **16.05.2005**

(51) Int Cl.:
**B64G 1/62** (2006.01)

(86) Numéro de dépôt international:
**PCT/FR2005/050327**

(87) Numéro de publication internationale:
**WO 2005/113338 (01.12.2005 Gazette 2005/48)**

(54) **PROCEDE ET DISPOSITIF DE STABILISATION AERODYNAMIQUE D'UN VEHICULE SPATIAL LORS DE SON RETOUR SUR TERRE**

VERFAHREN ZUR AERODYNAMISCHEN STABILISIERUNG EINES RAUMSCHIFFS WÄHREND DES WIEDEREINTRITTS FÜR SEINE BERGUNG SOWIE DURCHFÜHRUNGSVORRICHTUNG DAFÜR

METHOD FOR THE AERODYNAMIC STABILISATION OF A SPACECRAFT DURING RE-ENTRY, FOR THE RECOVERY THEREOF, AND DEVICE FOR IMPLEMENTING SAME

(84) Etats contractants désignés:
**IT**

(30) Priorité: **17.05.2004 FR 0450971**

(43) Date de publication de la demande:
**24.10.2007 Bulletin 2007/43**

(73) Titulaire: **ASTRIUM SAS**
**75016 Paris (FR)**

(72) Inventeurs:
• **MOULIN, Jacques**
**F-33127 MARTIGNAS SUR JALLES (FR)**
• **MOINEAU, Eric**
**F-33160 SAINT MEDARD EN JALLES (FR)**
• **PRAMPOLINI, Marco**
**F-78240 CHAMBOURCY (FR)**

(74) Mandataire: **Schmit, Christian Norbert Marie**
**SCHMIT CHRETIEN**
**111, cours du Médoc**
**33300 Bordeaux (FR)**

(56) Documents cités:
**US-A- 3 282 539     US-A- 3 286 951**
**US-A- 3 508 724     US-A- 4 504 031**

• **BUURSINK J: "Launch cost reduction by the reuse of the core stage of Ariane 5" JOURNAL OF REDUCING SPACE MISSION COST, 1998, pages 209-223, XP002307066**
• **MARRAFFA L ET AL: "INFLATABLE RE-ENTRY TECHNOLOGIES: FLIGHT DEMONSTRATION AND FUTURE PROSPECTS" ESA BULLETIN, ESA SCIENTIFIC AND PUBLICATIONS BRANCH. NOORDWIJK, NL, no. 103, août 2000 (2000-08), pages 78-85, XP000966642 ISSN: 0376-4265**

**Description**

La présente invention concerne les véhicules spatiaux tels que les lanceurs et plus particulièrement leur récupération.

Ces lanceurs sont constitués d'un ou plusieurs étages qui, une fois leur fonction propulsive achevée, sont séparés du reste du lanceur ou de la charge utile. Par la suite, ces étages retombent sur terre ou sont satellisés selon les conditions de cette séparation. Si l'on ne prend pas de précautions particulières, ces étages sont détruits lorsqu'ils retournent sur terre, soit pendant leur retour dans l'atmosphère du fait des contraintes thermiques et mécaniques rencontrées, soit à l'impact au sol ou en mer.

Or, il s'avère de plus en plus intéressant de pouvoir récupérer ces étages, soit à des fins d'expertise dans le cas de lanceurs consommables, soit pour leur réutilisation partielle ou totale quand on cherche à rendre les lanceurs réutilisables.

La retombée d'un étage de lanceur comprend en particulier le passage d'un régime intial supersonique à un régime subsonique. Or, les incidences, du fait des conditions aérodynamiques dans les deux cas, sont différentes, voire instables. Par exemple on peut avoir une incidence en subsonique de 110° et une incidence de 160° en supersonique, qui plus est associée à un mouvement oscillant de type Poinceau.

De ce fait, au passage du mur du son, l'étage peut subir un basculement brutal induisant des contraintes structurales importantes, pouvant conduire à la rupture de l'étage.

A ce jour et pour cette raison de nombreuses tentatives de récupération ont échoué.

Pour remédier à cette situation, il est nécessaire de mieux maîtriser la stabilisation aérodynamique longitudinale en vol de l'étage notamment en régime supersonique.

D'une façon générale, la stabilisation aérodynamique longitudinale en vol en régime supersonique d'un véhicule peu être obtenue par le réglage relatif des forces aérodynamiques et de gravité.

On peut en particulier jouer sur la position de centre de gravité par exemple en déplaçant des masses selon le régime de vol, ce qui est le cas par exemple de l'avion supersonique « Concorde ».

On peut jouer sur les forces aérodynamiques en adaptant la forme de l'objet volant (par exemple capsule type Apollo), ou par l'adjonction de dispositifs aérodynamiques judicieusement placés, parmi lesquels on peut citer :

- des empennages ou voilures, (ailes, dérives, canards ...)
- des dispositifs de freinage (parachutes, ballutes ou cônes arrière)
- des excroissances diverses.

Dans le cas de la retombée d'un étage de lanceur, les trois solutions ci-dessus sont envisageables, bien que le choix du dispositif soit lié au profil de mission envisagé, et entre autres, au centrage de l'étage, aux conditions de vol rencontrées (Mach, incidence) et bien sûr aux contraintes de masse et d'encombrement, particulièrement sévères pour les applications spatiales.

Le document de J. BUURSINK "Launch cost reduction by the reuse of the core stage of Ariane 5", JOURNAL OF REDUCING SPACE MISSION COST, 1998, pages 209-223 est considéré comme l'art antérieur le plus proche.

Le concept de voilure, bien que relativement difficile à mettre en oeuvre, en particulier du fait de sa masse élevée et des contraintes structurales induites, a été proposé dans le brevet US 6 454 216, qui décrit le déploiement d'une aile lors de la retombée. Le brevet US 6 260 797 décrit un dispositif du même type, mais pour une application différente.

Pour des applications plus spécifiquement hypersoniques, il est souvent fait appel à des surfaces traînantes, en général de forme conique, plus aptes à supporter les sollicitations thermiques induites par les conditions extrêmes rencontrées que des voilures ou des parachutes, ces approches étant illustrées par exemple :

- par US 6 076 771 qui décrit un véhicule de rentrée, qui peut être un étage supérieur de lanceur ;
- ou par US 5 871 173 qui décrit un cône constitué de plusieurs lamelles et dont le diamètre extérieur peut varier.

Toutefois, dans les deux cas cités ci-dessus, on notera que plus la vitesse est faible et plus la taille du cône doit être grande pour assurer le freinage, ce qui contraint à compléter le cône, qui n'est pas suffisant pour la maîtrise du vol, par un système de pilotage ou par un système faisant varier la forme du dispositif de freinage.

Pour obtenir un freinage aérodynamique en vol supersonique, on a déjà imaginé des structures aérodynamiques gonflables. C'est ainsi que par US 4 832 288 il est connu un système de récupération depuis l'orbite d'un véhicule spatial constitué d'un cône positionné à l'arrière du véhicule qui rentre, destiné à freiner ce véhicule et à le stabiliser sur sa trajectoire. Ce cône est déployé et soutenu par une structure gonflable et complété par des ailes dans la partie centrale du véhicule.

Par US 3 286 951, on connaît également un bouclier conique de rentrée gonflable englobant tout un étage de lanceur.

Ces approches présentent un intérêt pour des applications spatiales du fait de leur faible encombrement au lancement, de leur faible masse potetielle et aussi de la flottabilité apportée en cas d'amerissage, voire un effet « Airbag » en cas d'atterrissage.

La présente invention vise d'une manière générale la récupération d'étages de lanceurs spatiaux, notamment d'étages supérieurs qui sont en général en orbite, mais également la récupération de futurs lanceurs qu'on pourrait qualifier de mono-étage et assimilables à un dernier étage de lanceur.

Une telle récupération rassemble diverses contraintes dont les plus importantes sont :

- une certaine maîtrise de la trajectoire, de façon à limiter les sollicitations aérothermodynamiques et vibratoires sur l'engin et à maîtriser les zones de retombée ;
- la protection thermique des étages contre l'échauffement cinétique ;
- la maîtrise de l'atterrissage ou de l'amérissage ;
- la minimisation des masses des systèmes de façon à ne pas pénaliser excessivement la charge utile du lanceur.

A cet effet, l'invention a pour objet un procédé de stabilisation aérodynamique d'un véhicule spatial lors de son retour sur terre tel que revendiqué dans la revendication 1.

Le déploiement par gonflage de ladite structure permet de déplacer en régime supersonique le centre de poussée aérodynamique en direction du centre de gravité du corps et de forcer l'incidence d'équilibre à demeurer dans une zone telle qu'une traînée plus importante est générée, que le basculement du corps en régime transsonique est évité et qu'un lissage du pic de pression dynamique est obtenu ayant pour conséquence des effets thermomécaniques substantiellement moins dommageables et ne portant pas atteinte à l'intégrité du corps.

L'invention a également pour objet une structure gonflable telle que revendiquée dans la revendication 5.

D'autres caractéristiques et avantages ressortiront de la description qui va suivre de modes de mise en oeuvre du procédé de l'invention, description donnée à titre d'exemple uniquement et en regard des dessins annexés sur lesquels :

- la figure 1 illustre la phase de retour sur terre d'un étage de lanceur selon le procédé de l'invention ;
- la figure 2 est un diagramme d'évolution de la pression dynamique en fonction du temps en régime supersonique pour deux incidences d'équilibre ;
- la figure 3 représente schématiquement un étage de lanceur ;
- la figure 4 représente l'étage de la figure 3 équipé d'une structure gonflable selon l'invention, à l'état déployé;
- la figure 5 est un graphe de dimensionnement de la structure gonflable;
- les figures 6a et 6b un exemple de réalisation de la structure respectivement en position pliée et dépliée;
- la figure 7 un exemple en coupe d'un ballon d'une structure gonflable selon l'invention.

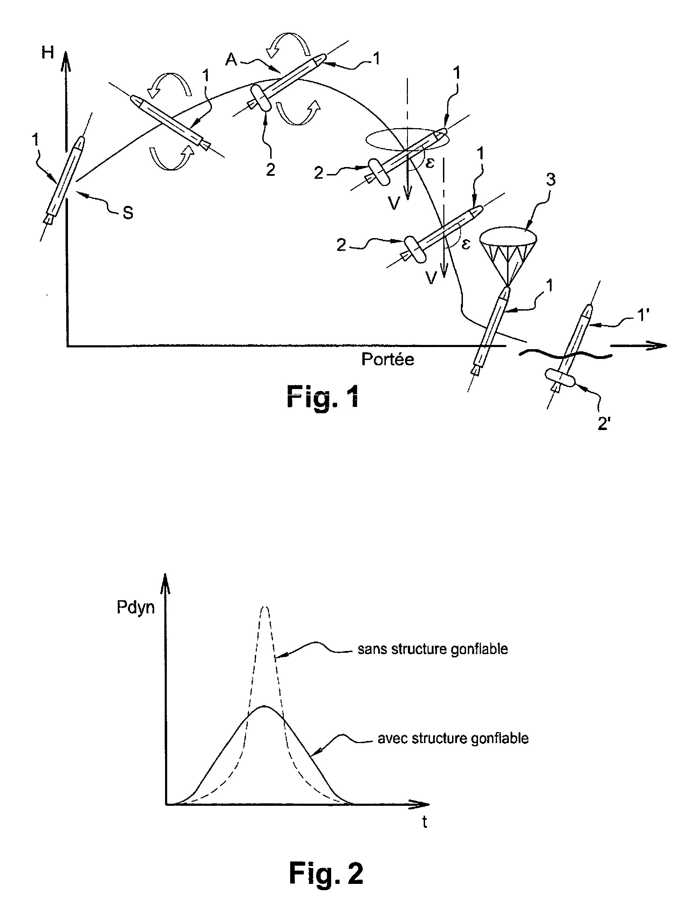

La figure 1 illustre le retour sur terre d'un étage de lanceur 1 équipé d'une structure gonflable selon l'invention constituée d'un tore 2 disposé à l'arrière de l'étage 1.

L'étage 1 décrit, à partir de sa séparation en S du lanceur, une courbe repérée en coordonnées cartésiennes par l'axe des abscisses (portée) et l'axe des ordonnées (altitude H).

Selon cet exemple, dans la première partie de la trajectoire de l'étage 1, avant l'atteinte de l'apogée A, la structure gonflable 2 n'est pas encore déployée (non visible sur la figure 1).

Le déploiement de ladite structure est réalisé avant l'atteinte par ledit véhicule de l'apogée A de sa trajectoire de lancement.

Peu avant l'atteinte de l'apogée A, par exemple quelques dizaines de secondes avant, on procède conformément à l'invention au gonflage de la structure 2 ce qui contraint l'étage 1 dans sa phase de descente vers la terre à stabiliser son incidence d'équilibre à une valeur $\varepsilon$ de l'ordre de 110°.

En fin de descente et avant l'atterrissage ou l'amérissage, la structure 2 est dégonflée et des moyens conventionnels, du type parachute 3 par exemple, sont déployés pour ralentir la descente et réduire l'impact avec le sol ou l'eau.

Dans le cas où un amérissage est prévu, l'étage 1' peut conserver sa structure 2' gonflée ce qui renforce sa flottabilité.

La structure gonflable 2 est, conformément à l'invention, une structure axisymétrique ou quasi axisymétrique dont l'axe est confondu avec l'axe longitudinal de l'étage 1. La structure 2 est avantageusement un tore de section variable, circulaire, triangulaire, ovale ou autre et dont le dimensionnement est déterminé en fonction de divers paramètres comme on le verra plus loin.

Dans le cas d'un véhicule déjà en orbite, le déploiement de la structure sera réalisé lors du domaine supersonique voire hypersonique du vol de rentrée du véhicule dans l'atmosphère.

Dans un cas comme dans l'autre, vol balistique avec apogée ou rentrée, le déploiement de ladite structure doit être réalisé au minimum avant le passage en mode trans-sonique du véhicule de sorte que son incidence est stabilisée au moment du passage du mur du son ce qui permet un freinage du véhicule sans causer d'échauffements ou de vibrations néfastes à ce véhicule et permet d'éviter un basculement trop violent du véhicule lors du passage du mur du son.

Dans le cas d'un vol balistique court, pour un étage inférieur d'une fusée notamment, on déploie le tore aussitôt que possible après la fin de la propulsion de l'étage, le déploiement du tore nécessitant de l'ordre de quelques dizaines de secondes.

La structure gonflable est notamment dimensionnée en sorte de rapprocher les centres de poussée et de gravité et maintenir ainsi le corps dans un domaine d'incidence d'équilibre correspondant à un compromis échauffement/traînée favorable par exemple entre 100 et 120° au cours de sa descente et en particulier dès la phase supersonique.

Le déploiement de la structure gonflable 2 alors que l'étage 1 est encore en régime supersonique voire même en régime hypersonique permet de déplacer le centre de poussée aérodynamique en direction du centre de gravité, et de forcer ainsi l'incidence d'équilibre à s'établir aux environs de 110 ° et permet en outre de lisser le pic de pression dynamique comme illustré par la figure 2.

Sur cette figure on a représenté en tiretés le profil d'évolution de la pression dynamique Pdyn en fonction du temps dans la phase de rentrée dans l'atmosphère d'un étage de lanceur non équipé du dispositif de l'invention.

En régime supersonique un tel étage subit des accélérations et vitesses angulaires importantes et prend une incidence d'équilibre de l'ordre de 160° (+/-10°).

Ceci génère une traînée moins importante mais un pic de Pdyn plus fort et moins étalé ayant comme conséquence des effets thermomécaniques importants avec de forts risques d'endommagement voire de destruction dudit étage.

Au contraire, avec une incidence d'équilibre centrée autour de 110° (+/-10°) on observe avec l'étage 1 équipé d'une structure gonflable 2 selon l'invention un mouvement angulaire plus lent et une accélération plus faible, générant une traînée plus importante et un pic de Pdyn (courbe en trait plein sur la figure 2) plus faible et plus étalé, avec comme conséquence des effets thermomécaniques substantiellement moindres et donc non-dommageables.

C'est ainsi que le passage du régime supersonique au régime subsonique s'opèrera sans basculement brutal de l'étage 1.

Le dispositif de l'invention permet ainsi de maîtriser au cours de la retombée de l'étage 1 son attitude longitudinale et sa stabilisation aérodynamique longitudinale.

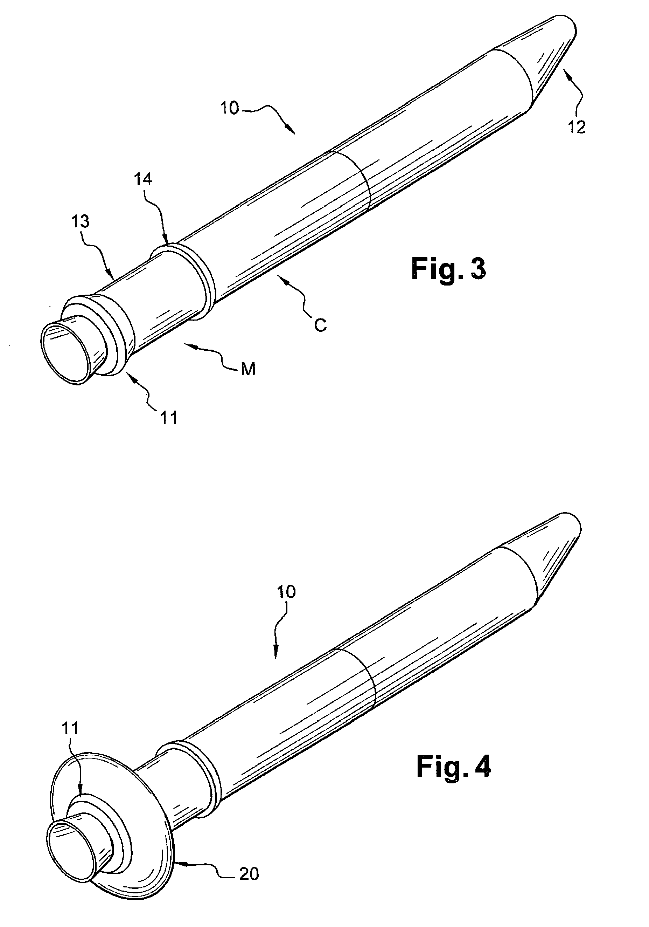

Sur la figure 3 on a représenté schématiquement un étage de lanceur 10 constitué d'un corps cylindrique muni à son extrémité arrière, au droit du propulseur, d'une jupe 11.

La figure 4 représente l'étage 10 de la figure 3 muni d'une structure gonflable selon l'invention constituée d'un tore 20 de section circulaire en position déployée. La structure gonflable comporte soit un tore 2,20 annulaire autour d'une section du véhicule, soit des segments de tore réalisés par des ballons 21 séparés éventuellement plus faciles à réaliser et/ou à gonfler.

Le tore 20 ou les segments de tore 21 sont fixés au droit de la jupe 11 et est rapporté sur la face externe de la jupe.

Une structure gonflable est avantageuse du fait de son poids relativement réduit et de son encombrement également réduit à l'état non-déployé.

De préférence, le rayon (en section) du tore 20 est, en comparaison avec le rayon du corps de l'étage 10, dans un rapport de l'ordre de 60 %.

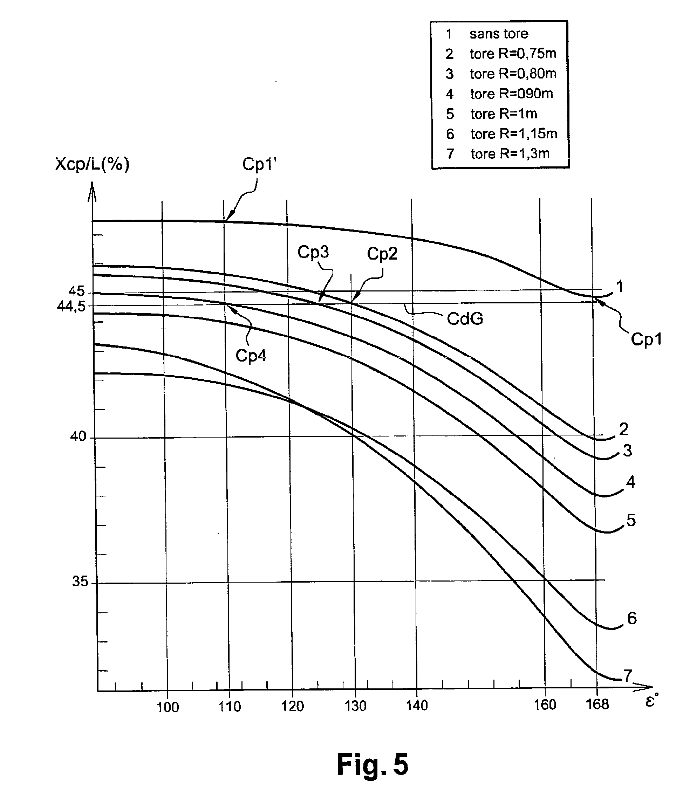

La figure 5 est un graphe illustrant le dimensionnement du tore 20.

En abscisse est reporté l'angle d'incidence ε et en ordonnée l'emplacement du centre de poussée (Xcp) en pourcentage de la longueur L de l'étage 10 à partir de l'extrémité arrière de ce dernier.

Sur le graphe, la droite CdG indique la position du centre de gravité nominal de l'étage 10, soit 44,5 % de la longueur L dans l'exemple choisi.

Le dimensionnement du tore 20 est réalisé avec les hypothèses suivantes :

- M (nombre de Mach) = 4,5
- CdG : 44,5 % L

- $$\frac{\text{Rtore}}{\text{Rétage}} = 60 \text{ \%}$$

- ε = 110°

Par ailleurs, on ne tient pas compte des variations du roulis dues à la pointe avant 12 non-axisymétrique de l'étage 10.

On observe tout d'abord sur le graphe que l'incidence d'équilibre en mode supersonique pour un étage sans tore (courbe 1, figure 5), correspondant à un centre de poussée Cp1 très proche du centre de gravité, s'établit à la valeur 168° environ.

Avec un étage 10 équipé d'un tore 20 de rayon R = 0,90 m (courbe 4), l'incidence d'équilibre s'établit à la valeur 110° correspondant à la superposition des positions du centre de poussée Cp4 et du centre de gravité.

On constate que pour une telle incidence de 110° la position Cp1 du centre de poussée de l'étage non-équipé (courbe 1) est nettement plus en avant du centre de gravité.

Le déploiement du tore a donc eu pour effort de déplacer vers l'arrière le centre de poussée, en direction du centre de gravité, jusqu'à la superposition des deux centres.

On constate par ailleurs que pour un même étage 10 le dimensionnement du tore à une autre valeur de rayon donne des valeurs d'incidence d'équilibre correspondant à des superpositions ou des voisinages très proches entre centre de poussée et centre de gravité plus éloignées de la valeur 110° entraînant une stabilité aérodynamique moins sûre de l'étage.

C'est ainsi qu'avec un tore de rayon R = 0,75 m (courbe 2) la superposition desdits centres (Cp2) s'établit à une valeur d'incidence d'environ 130°.

Un rayon R = 0,80 m (courbe 3, Cp3) est, par contre, meilleur, car l'incidence est plus proche de 110°. Au contraire, les valeurs de rayon R = 1,15 m et 1,3 m (courbes 6 et 7) ne conviennent pas du tout car elles n'entraînent pas d'effet de rapprochement des centres de poussée et de gravité dans des valeurs d'incidence d'équilibre satisfaisantes.

Il est enfin à noter qu'à l'incidence 110° la marge statique qui est égale à l'écart entre la position du foyer aérodynamique et celle du centre de poussée est maximale pour toutes les configurations envisagées (étage 10 sans tore, ou avec tores 1 à 7), le foyer aérodynamique étant, à cette incidence, le plus en arrière du centre de gravité, ce qui correspond à une stabilité maximale du centre de gravité.

Le dimensionnement du tore sera donc calculé tout d'abord à partir de l'incidence que l'on souhaite obtenir.

Pour différentes hypothèses de tores, des courbes portant le centre de poussée en fonction de l'incidence sont tracées. Pour une incidence donnée, le centre de gravité et le centre de poussée aérodynamique devant être confondus, le choix de la courbe correspondante à l'incidence voulue permet en final de choisir le tore qui permet de confondre centre de poussée et centre de gravité.

La structure gonflable 20 a été représentée sur la figure 4 disposé à hauteur de la jupe de propulseur 11, mais on pourrait également agencer ledit dispositif à hauteur du moteur en zone 13 (figure 3) ou bien encore un peu plus près du centre de gravité de l'étage 10, dans la zone 14 à hauteur de la jonction entre la partie moteur M et la partie réservoir de combustible C.

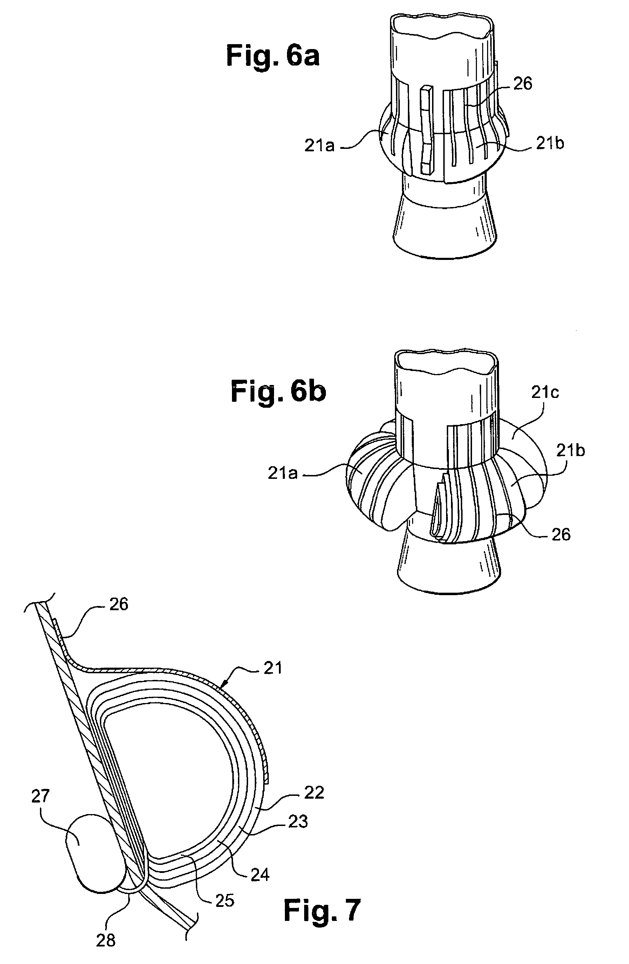

La structure gonflable 20 représentée aux figures 6a et 6b et en coupe en figure 7 est un tore 21 ici représenté segmenté pour permettre de voir les équipements passant sous le système.

La structure gonflable peut toutefois être réalisée avec une pluralité de ballons en chapelet.

L'enveloppe de la structure gonflable comporte une protection thermique 22, 23, 24 et une couche étanche 25. La protection thermique est réalisée par une couche d'isolation thermique notamment telle que décrite dans le document FR 2 658 266 et comporter en particulier une couche de feutre d'isolation thermique 23 entre deux couches de tissu 22, 24. Le feutre d'isolation thermique peut notamment être un feutre céramique comprenant des fibres d'oxyde d'aluminium, d'alumino-silicate ou des fibres d'oxyde de zirconium. Le tissu 22 sur la face chaude externe est de préférence constitué de fils, filaments d'oxyde d'aluminium et/ou d'alumino-silicate, le tissu 24 sur la face froide pouvant être un tissu à base de fibres aramide ou encore des tissus en fibres de carbone.

En alternative, la couche de protection thermique peut comporter une base silicone renforcée de tissu en fibres de silice.

La couche étanche 25 sera par exemple réalisée avec un matériau élastomère léger.

Pour une enveloppe réalisée avec un tore de section circulaire ayant une section de rayon 900 mm, un volume de 38 $m^3$ et une surface de 85 $m^2$, la masse de l'enveloppe à prévoir est de l'ordre de 150 à 220 kg, la masse de la protection thermique de l'ordre de 110 à 330 kg.

La structure gonflable repliée est retenue par des sangles 26 de stabilisation, et reliée par des tuyauteries 28 à des générateurs de gaz 27 qui peuvent être des générateurs de gaz chaud par exemple des générateurs à propergol solide de forme cylindrique ou sphérique en alliage d'aluminium ou des générateurs de gaz froid tels que des sphères de 30 l gonflées à 200 bar.

L'invention ne se limite pas aux exemples représentés et notamment, la structure gonflable peut être segmentée en une pluralité de sous structures, les générateurs de gaz peuvent être régulièrement répartis selon le pourtour du véhicule, le système comportant par exemple 5 générateurs répartis selon des angles de 72°.

## Revendications

1. Procédé de stabilisation aérodynamique d'un véhicule spatial lors de son retour sur terre, en vue de sa récupération, ledit véhicule étant constitué d'un corps (1) de forme allongée, notamment axisymétrique ou quasi axisymétrique, **caractérisé en ce qu'**il consiste à déployer une structure gonflable (2,20) formée d'un tore ou de segments de tore d'axe confondu avec l'axe longitudinal dudit corps (1), ladite structure gonflable étant disposée entre le centre de gravité nominal et l'extrémité arrière du corps et dimensionnée en sorte de rapprocher les centres de poussée et de gravité et maintenir ainsi le corps (1) dans un domaine d'incidence d'équilibre au cours de sa descente dans l'atmosphère, et **en ce que** ladite structure gonflable est positionnée et dimensionnée en fonction du véhicule en sorte de maintenir un angle d'incidence de l'ordre de 100 à 120 °.

2. Procédé selon la revendication 1, **caractérisé en ce que** le déploiement de ladite structure est réalisé avant l'atteinte par ledit véhicule de l'apogée (A) de sa trajectoire de lancement

3. Procédé selon la revendication 1 ou 2, **caractérisé en ce que** le déploiement de ladite structure est réalisée lors du domaine supersonique du vol du véhicule.

4. Procédé selon l'une quelconque des revendications 1 à 3, **caractérisé en ce que** le déploiement de ladite structure est réalisé avant le passage en mode transsonique du véhicule de sorte que l'incidence du véhicule est stabilisée au moment du passage du mur du son.

5. Dispositif pour la mise en oeuvre du procédé selon l'une quelconque des revendications 1 à 4, **caractérisé en ce qu'**il comprend une structure gonflable (2,20) formée de segments de tore (2, 20, 21) d'axe confondu avec l'axe longitudinal du corps du véhicule spatial.

**6.** Dispositif suivant la revendication 5, **caractérisé en ce que** les segments de tore présentent une section circulaire et un rayon (R) égal à environ 60 % du rayon du véhicule.

**7.** Dispositif suivant la revendication 5 ou 6, **caractérisé en ce que** les segments de tore sont disposés sur la face externe de la jupe d'un propulseur (11) du véhicule.

**8.** Dispositif suivant la revendication 5 ou 6, **caractérisé en ce que** les segments de tore sont disposés sur la face externe du corps du véhicule, entre la jupe de propulseur (11) et la partie réservoir de combustible (C) du véhicule.

**9.** Dispositif suivant l'une quelconque des revendications 5 à 8, **caractérisé en ce que** l'enveloppe de la structure gonflable comporte une protection thermique (22, 23, 24) et une couche étanche (25).

## Claims

**1.** A method for the aerodynamic stabilisation of a spacecraft when returning to earth, with a view to its recovery, said vehicle comprising an elongate-shaped body (1), in particular axisymetric or quasi-axisymetric, **characterised in that** it comprises deploying an inflatable structure (2, 20) formed by a torus or segments of a torus with its axis merged with the longitudinal axis of said body (1), said inflatable structure being disposed between the nominal centre of gravity and the rear end of the body and sized so as to bring close together the centres of thrust and gravity and thus maintain the body (1) in an equilibrium incidence domain during its descent in the atmosphere, and **in that** said inflatable structure is positioned and sized according to the craft so as to maintain an angle of incidence of around 100° to 120°.

**2.** A method according to claim 1, **characterised in that** the deployment of said structure is achieved before said craft reaches the apogee (A) of its launch trajectory.

**3.** A method according to claim 1 or 2, **characterised in that** the deployment of said structure is achieved during the supersonic range of flight of the craft.

**4.** A method according to any one of claims 1 to 3, **characterised in that** the deployment of said structure is achieved before the craft goes into transonic mode so that the angle of incidence of the vehicle is stabilised at the time of passing through the sound barrier.

**5.** A device for implementing the method according to any one of claims 1 to 4, **characterised in that** it comprises an inflatable structure (2, 20) formed by segments (2, 20, 21) of a torus with its axis merged with the longitudinal axis of the body of the spacecraft.

**6.** A device according to claim 5, **characterised in that** the torus segments have a circular cross section and a radius (R) equal to approximately 60% of the radius of the craft.

**7.** A device according to claim 5 or 6, **characterised in that** the torus segments are disposed on the external face of the skirt of a thruster (11) of the craft.

**8.** A device according to claim 5 or 6, **characterised in that** the torus segments are disposed on the external face of the body of the craft, between the skirt of the thruster (11) and the fuel-tank part (C) of the craft.

**9.** A device according to any one of claims 5 to 8, **characterised in that** the envelope of the inflatable structure comprises thermal protection (22, 23, 24) and an impervious layer (25).

## Patentansprüche

**1.** Verfahren zur aerodynamischen Stabilisierung eines Raumfahrzeugs bei seiner Rückkehr zur Erde im Hinblick auf seine Wiederverwendung, wobei das Fahrzeug aus einem Körper (1) mit lang gestreckter, insbesondere achsensymmetrischer oder fast achsensymmetrischer Form gebildet ist, **dadurch gekennzeichnet, dass** es darin besteht, eine aufblasbare Struktur (2, 20), die aus einem Torus oder aus Segmenten eines Torus gebildet ist, dessen Achse mit der Längsachse des Körpers (1) deckungsgleich ist, wobei die aufblasbare Struktur zwischen dem Sollschwerpunkt und dem hinteren Ende des Körpers angeordnet und so bemessen ist, dass das Schubzentrum und der Schwerpunkt einander angenähert werden und somit der Körper (1) während seines Falls in der Atmosphäre in einem Gleichgewichts-Eintrittsbereich gehalten wird, und dass die aufblasbare Struktur in Abhängigkeit von dem Fahrzeug positioniert und bemessen ist, derart, dass ein Eintrittswinkel in der Größenordnung von 100 bis 120° beibehalten wird.

**2.** Verfahren nach Anspruch 1, **dadurch gekennzeichnet, dass** das Entfalten der Struktur erfolgt, bevor das Fahrzeug das Apogäum (A) seiner Abschussbahn erreicht.

**3.** Verfahren nach Anspruch 1 oder 2, **dadurch gekennzeichnet, dass** das Entfalten der Struktur im Überschallbereich des Flugs des Fahrzeugs erfolgt.

4.   Verfahren nach einem der Ansprüche 1 bis 3, **dadurch gekennzeichnet, dass** das Entfalten der Struktur vor dem Übergang in den Transschallbetrieb des Fahrzeugs erfolgt, derart, dass der Eintritt des Fahrzeugs zum Zeitpunkt des Durchbrechens der Schallmauer stabilisiert ist.

5.   Vorrichtung für die Ausführung des Verfahrens nach einem der Ansprüche 1 bis 4, **dadurch gekennzeichnet, dass** sie eine aufblasbare Struktur (2, 20) umfasst, die aus Torussegmenten (2, 20, 21) mit einer Achse, die mit der Längsachse des Körpers des Raumfahrzeugs dekkungsgleich ist, gebildet ist.

6.   Vorrichtung nach Anspruch 5, **dadurch gekennzeichnet, dass** die Torussegmente einen kreisförmigen Querschnitt und einen Radius (R), der gleich etwa 60 % des Radius des Fahrzeugs ist, aufweisen.

7.   Vorrichtung nach Anspruch 5 oder 6, **dadurch gekennzeichnet, dass** die Torussegmente auf der äußeren Fläche der Verkleidung eines Triebwerks (11) des Fahrzeugs angeordnet sind.

8.   Vorrichtung nach Anspruch 5 oder 6, **dadurch gekennzeichnet, dass** die Torussegmente auf der äußeren Fläche des Körpers des Fahrzeugs zwischen der Verkleidung des Triebwerks (11) und dem Brennstoffvorratsbehälterabschnitt (C) des Fahrzeugs angeordnet sind.

9.   Vorrichtung nach einem der Ansprüche 5 bis 8, **dadurch gekennzeichnet, dass** die Hülle der aufblasbaren Struktur einen Wärmeschutz (22, 23, 24) und einen dichten Überzug (25) umfasst.

**Fig. 1**

**Fig. 2**

Fig. 3

Fig. 4

**Fig. 5**

**Fig. 6a**

26

21a    21b

**Fig. 6b**

21c

21a    21b

26

26

21

27

22

23

24

25

28

**Fig. 7**

## RÉFÉRENCES CITÉES DANS LA DESCRIPTION

**Documents brevets cités dans la description**

- US 6454216 B
- US 6260797 B
- US 6076771 A
- US 5871173 A

- US 4832288 A
- US 3286951 A
- FR 2658266

**Littérature non-brevet citée dans la description**

- **J. BUURSINK.** Launch cost reduction by the reuse of the core stage of Ariane 5. *JOURNAL OF REDUCING SPACE MISSION COST,* 1998, 209-223